# FASCICULE DE BREVET EUROPEEN

(11) **EP 2 867 830 B1**
(45) Date de publication et mention de la délivrance du brevet: **07.08.2019**
(21) Numéro de dépôt: 13732904.1
(22) Date de dépôt: 27.06.2013
(51) Int. Cl.: G06K 19/073, G06K 19/07, G06K 7/10

(54) **PROCÉDÉ DE GESTION DU MODE DE FONCTIONNEMENT D'UNE ÉTIQUETTE SANS CONTACT ET ÉTIQUETTE CORRESPONDANTE**
VERFAHREN ZUR VERWALTUNG DES BETRIEBSMODUS EINES KONTAKTLOSEN ETIKETTS UND ZUGEHÖRIGES ETIKETT
METHOD FOR MANAGING THE OPERATING MODE OF A CONTACTLESS TAG, AND RELATED TAG

(30) Priorité: 29.06.2012 FR 1256290
(43) Date de publication de la demande: 06.05.2015
(73) Titulaire: Orange, 75015 Paris (FR); Invia, 13590 Meyreuil (FR)
(72) Inventeur: FENZY PEYRE, Caroline, F-06100 Nice (FR); MOREAUX, Christophe, F-13109 Simiane Collongue (FR)
(74) Mandataire: Vidon Brevets & Stratégie
(86) Numéro de dépôt international: PCT/EP2013/063568
(87) Numéro de publication internationale: WO 2014/001477

(56) Documents cités:
- EP-A1- 1 429 301
- US-A- 5 467 081
- US-A1- 2002 135 478
- US-A1- 2005 156 709

## Description

### 1. Domaine de l'invention

Le domaine de l'invention est celui des étiquettes électroniques, par exemple les étiquettes utilisant une communication sans contact, notamment des étiquettes de type RFID (pour radio-identification, ou « Radio Frequency IDentification » en anglais) communiquant en HF (pour hautes fréquence, ou « High Frequency » en anglais) et/ou UHF (pour ultra hautes fréquence, ou « Ultra High Frequency » en anglais) pour échanger des données.

Plus précisément, l'invention concerne un mécanisme de désactivation/réactivation de telles étiquettes.

L'invention trouve des applications dans tous les domaines nécessitant le suivi de produits, ou d'objets, comme par exemple des produits du commerce, ou des objets de luxe.

Par exemple, l'invention trouve des applications sur toute la chaine d'approvisionnement de tels produits (production, logistique, distribution, vente) et jusqu'au consommateur, donc au grand public.

### 2. Art antérieur

On connaît une technique de désactivation de telles étiquettes, consistant à mettre en oeuvre une commande nommée « kill », définie dans le standard « EPCglobal gen2 » utilisé dans la majorité des étiquettes UHF. Certaines étiquettes HF ont également une commande « kill », même si celle-ci ne fait pas partie des standards HF.

La commande « kill » rend l'étiquette totalement muette, par l'écriture d'un statut définitif dans la mémoire de l'étiquette, et est irréversible, c'est-à-dire qu'il est impossible de rétablir une communication avec l'étiquette.

Une autre technique de désactivation consiste à détruire, physiquement, une partie de l'étiquette. En général, il s'agit d'une destruction de la liaison antenne/circuit intégré de l'étiquette, qui s'opère en arrachant un morceau de l'étiquette. L'étiquette devient alors muette, mais l'opération peut être inversée au moyen d'un réassemblage du circuit intégré sur une nouvelle antenne. En revanche, en général, ces moyens de réassemblage ne sont pas à la portée de l'utilisateur final de l'étiquette.

Il existe également des techniques consistant à protéger l'accès en lecture d'une partie de la mémoire de ces étiquettes. Il s'agit en général de la partie de la mémoire contenant les données « utilisateur ». Ensuite, après présentation d'un mot de passe, un utilisateur autorisé peut rétablir l'accès à cette partie de la mémoire. En revanche, le numéro d'identification unique (UID ou TID) de l'étiquette ne peut pas être protégé car il est nécessaire pour établir la communication entre le lecteur et l'étiquette (phase d'anticollision). Toutes les informations contenues dans la mémoire de l'étiquette ne peuvent donc être protégées par cette technique.

Enfin, il existe également une technique d'« antivol » de produits portant de telles étiquettes, sous la forme d'une fonction « EAS » (pour « Electronic Article Surveillance » en anglais). C'est une fonction réversible, pouvant être activée et désactivée par un utilisateur autorisé. L'activation de l'EAS dans une étiquette la fait répondre à une commande « ALARM », et l'EAS peut être désactivée lorsque le produit est vendu par exemple. En revanche, cette activation de l'EAS ne permet pas de protéger les données contenues dans l'étiquette.

Ainsi, un inconvénient de certaines techniques actuelles connues réside dans le fait qu'elles désactivent les étiquettes de façon irréversible, les rendant inutilisables.

Un autre inconvénient d'autres méthodes connues, réversibles, réside dans le fait qu'elles ne permettent pas de masquer la totalité des données présentes dans l'étiquette. En particulier l'UID reste visible, ce qui rend possible le tracé/suivi de l'étiquette et de son porteur.

Les principaux inconvénients des techniques de l'art antérieur sont donc la non réversibilité de certaines solutions et le fait de ne pas désactiver les identifiants pour les autres solutions.

La demande de brevet américaine US 2002/0135478 A1 propose une technique de désactivation/ réactivation d'un transpondeur (par exemple de type RFID) basée sur la transmission d'un signal de demande d'autorisation, par un équipement de commande au transpondeur (avant la commande de désactivation/réactivation), permettant au transpondeur d'accepter ou non la commande de désactivation/réactivation transmise ensuite par l'équipement de commande au transpondeur.

La demande de brevet européenne EP 1 429 301 A1 propose également une technique de désactivation/réactivation d'une étiquette électronique basée sur l'association d'un statut à l'étiquette, statut qui est repris dans une base de données associée à une pluralité d'étiquettes elles-mêmes associées à des articles (destinés par exemple à être vendus).

### 3. Exposé de l'invention

Dans un mode de réalisation particulier de l'invention, il est proposé un procédé de gestion du mode de fonctionnement d'une étiquette électronique, selon la revendication 1.

Ainsi, l'invention repose sur un mode de gestion du fonctionnement d'une étiquette électronique, permettant de la désactiver de manière réversible, de façon à inhiber l'accès à l'identifiant de l'étiquette, identifiant unique, propre à cette étiquette et qui sert à la distinguer des autres étiquettes.

L'étiquette qui, de la sorte, ne peut plus être distinguée d'une autre étiquette par équipement de commande extérieur à cette étiquette, est en quelque sorte « anonymisée » : son identifiant, rendu inaccessible par l'étiquette elle-même, ne pourra être transmis par cette étiquette vers un équipement de commande (de type lecteur d'étiquette ou autre). L'étiquette ne peut donc être utilisée pour une application et/ou un service requérant la connaissance de cet identifiant d'étiquette, par exemple une application et/ou un service qui communiquerait avec cette étiquette sur la base de cet identifiant d'étiquette et/ou localiserait cette étiquette via cet identifiant d'étiquette.

Dans le mode désactivé, encore appelé mode sécurisé, l'identifiant d'étiquette n'est plus accessible en lecture/écriture, mais l'étiquette n'est pas complètement inutilisable, car elle peut répondre à une commande permettant de la réactiver, ce qui permet de l'utiliser à nouveau, contrairement aux techniques de l'art antérieur.

Selon une caractéristique particulière, l'étape de désactivation comprend les sous-étapes suivantes :
- réception d'une commande de désactivation comprenant au moins un identifiant d'état, noté identifiant de substitution, et un mot de passe de désactivation ;
- comparaison dudit mot de passe de désactivation avec un mot de passe de désactivation de référence ;
- si ladite sous-étape de comparaison est positive :
   o écriture dudit identifiant de substitution dans un champ de donné représentatif de l'état désactivé ou non de l'étiquette;
   o mise à jour de droits d'accessibilité en lecture et en écriture d'au moins une partie de ladite mémoire de ladite étiquette contenant l'identifiant d'étiquette et de droits de réponse de l'étiquette aux commandes reçues, applicables dans l'état désactivé de ladite étiquette.

Ainsi, selon ce mode de réalisation particulier de l'invention, la désactivation de l'étiquette consiste à recevoir, dans un premier temps, une commande de désactivation comprenant un mot de passe de désactivation et un identifiant non unique de l'étiquette, appelé identifiant de substitution.

Le mot de passe de désactivation permet de sécuriser la désactivation, c'est-à-dire de vérifier que le passage de l'étiquette d'un état activé à un état désactivé est autorisé.

Ainsi, dans un deuxième temps, ce mot de passe accompagnant la commande de désactivation est comparé avec un mot de passe de référence, stocké dans la mémoire de l'étiquette. Si la comparaison est positive, alors la commande de désactivation est validée et l'identifiant de substitution est mémorisé, dans un troisième temps, dans la mémoire de l'étiquette, pour marquer la validation du mode sécurisé. De plus, les droits d'accès des différentes zones mémoire que l'on souhaite rendre « invisibles » dans l'état désactivé sont modifiés (pas d'accès en lecture et écriture de la zone mémoire comprenant l'identifiant d'étiquette de l'étiquette, idem éventuellement pour la zone mémoire comprenant les données utilisateurs, et/ou la zone mémoire comprenant le code ePC).

Par ailleurs, cet identifiant de substitution ne permet pas d'identifier cette étiquette, ni de la localiser de façon unique, à la différence de l'identifiant d'étiquette associé classiquement à l'étiquette dans l'état activé.

L'identifiant de substitution enregistré est alors utilisable pour déterminer si l'étiquette est dans l'état activé ou bien dans l'état désactivé : sa présence en mémoire, à la place d'une valeur par défaut (valeur nulle, par exemple) permet par exemple de détecter que l'étiquette est dans l'état désactivé.

Selon un aspect particulier de l'invention, l'étape de désactivation comprend une sous-étape de transmission, par ladite étiquette à un équipement émetteur de ladite commande de désactivation, d'un mot de passe de réactivation.

Ainsi, pour des raisons de sécurité, le mot de passe qui servira à la réactivation ultérieure de l'étiquette est fourni par l'étiquette elle-même, les données émises par une étiquette étant plus difficile à « espionner » que les informations transmises vers l'étiquette.

Selon l'invention, l'identifiant de substitution est transmis par l'étiquette en lieu et place dudit identifiant d'étiquette dans une réponse à une commande reçue dans l'état désactivé.

Selon un aspect particulier de l'invention, le procédé comprend une étape de réactivation lors de laquelle ladite étiquette passe de l'état désactivé à l'état activé, ladite étape de réactivation comprenant les sous-étapes suivantes :
- réception d'une commande de réactivation comprenant au moins un mot de passe de réactivation ;
- comparaison dudit mot de passe de réactivation avec un mot de passe de réactivation de référence ;
- si ladite sous-étape de comparaison est positive :
   ∘ écriture, dans un champ de données représentatif de l'état désactivé ou non de l'étiquette, d'une valeur représentative de l'état activé de ladite étiquette ;
   ∘ mise à jour de droits d'accessibilité en lecture et en écriture d'au moins une partie de ladite mémoire contenant l'identifiant d'étiquette et de droits de réponse de l'étiquette aux commandes reçues, applicables dans l'état activé de ladite étiquette.

Ainsi, selon ce mode de réalisation de l'invention, une étiquette désactivée peut être réactivée, de manière sécurisée, à l'aide d'un mot de passe. Comme pour la désactivation, ce mot de passe est comparé à un mot de passe de réactivation de référence, stocké dans la mémoire de l'étiquette.

Ensuite, les différentes autres zones mémoire devant être accessibles en mode activé sont rendues à nouveau accessibles (par exemple l'identifiant d'étiquette, et, si cette zone existe, la zone mémoire contenant les données propres à l'utilisateur).

De plus, l'étiquette peut à nouveau répondre à tout type de commande, tel que défini dans un état de fonctionnement activé.

Une fois réactivée, l'étiquette est « visible » (son contenu est accessible) et communicante (elle peut répondre normalement aux sollicitations d'un équipement de commande).

En particulier, l'étape de réactivation comprend une sous-étape de transmission, par ladite étiquette à un équipement émetteur de ladite commande de réactivation, d'un mot de passe de désactivation.

Selon un mode de réalisation particulier de l'invention, l'étiquette est configurée pour communiquer via un premier canal et via un deuxième canal, ladite désactivation étant une désactivation sélective d'un mode de communication utilisant le premier canal, et dans lequel, dans l'état désactivé, la transmission dudit au moins un identifiant d'étiquette à un dit équipement de commande est inhibée via le premier canal et autorisée via le deuxième canal, et ladite étiquette répond à une commande de réactivation reçue via le deuxième canal en autorisant à nouveau la transmission dudit au moins un identifiant d'étiquette via le premier canal.

Ainsi, selon ce mode de réalisation particulier de l'invention, dans lequel l'étiquette RFID peut communiquer selon deux canaux, par exemple en HF et/ou en UHF, le procédé de gestion du mode de fonctionnement de l'étiquette permet de gérer la désactivation sélective de l'un au moins des deux modes de communication.

De cette manière, ce mode de réalisation de l'invention permet par exemple de désactiver l'étiquette uniquement en UHF, de façon à empêcher le suivi de l'étiquette par des lecteurs à longue distance, par exemple pour des produits en sortie d'usine, tout en permettant son suivi en courte distance en HF, par exemple pour ces mêmes produits au sein de l'usine.

Selon un aspect particulier, l'étape de désactivation est déclenchée suite à la réception d'une commande de désactivation reçue via le premier canal ou via le deuxième canal.

Selon une caractéristique particulière de l'invention, dans l'état désactivé, ladite étiquette ne répond à aucune commande reçue via le premier canal.

En particulier, l'étape de désactivation comprend les sous-étapes suivantes :
- réception d'une commande de désactivation comprenant au moins un identifiant d'état propre au premier canal, noté premier identifiant de substitution, et un mot de passe de désactivation propre au premier canal ;
- comparaison dudit mot de passe de désactivation propre au premier canal avec un mot de passe de désactivation de référence propre au premier canal ;
- si ladite sous-étape de comparaison est positive :
   ∘ écriture dudit premier identifiant de substitution dans un champ de données représentatif de l'état désactivé ou non du mode de communication utilisant le premier canal;
   ∘ mise à jour de droits d'accessibilité en lecture et en écriture d'au moins une partie de ladite mémoire de ladite étiquette contenant le premier identifiant d'étiquette et de droits de réponse de l'étiquette aux commandes reçues via le premier canal, applicables dans l'état désactivé.

Selon un aspect particulier de l'invention, le procédé comprend une étape de réactivation lors de laquelle ladite étiquette passe de l'état désactivé à l'état activé, ladite étape de réactivation comprenant les sous-étapes suivantes :
- réception d'une commande de réactivation émise via le second canal par un équipement de commande, ladite commande de réactivation comprenant au moins un mot de passe de réactivation propre au premier canal;
- comparaison dudit mot de passe de réactivation propre au premier canal avec un mot de passe de réactivation de référence propre au premier canal;
- si ladite sous-étape de comparaison est positive :
   o écriture, dans un champ de données représentatif de l'état désactivé ou non du mode de communication utilisant le premier canal, d'une valeur représentative de l'état activé de ladite étiquette ;
   ∘ mise à jour de droits d'accessibilité en lecture et en écriture d'au moins une partie de ladite mémoire de ladite étiquette contenant le premier identifiant d'étiquette, et de droits de réponse de l'étiquette aux commandes reçues via le premier canal, applicables dans l'état activé de ladite étiquette.

Ainsi, selon ce mode de réalisation particulier de l'invention, le procédé de gestion du mode de fonctionnement de l'étiquette permet de rendre une étiquette totalement muette et invisible dans l'un des deux modes de communication, grâce au second mode de communication qui peut être utilisé pour réactiver l'étiquette.

Par exemple, l'étiquette peut être désactivée totalement en mode UHF, c'est-à-dire ne plus répondre à aucune commande, et ne permettre l'accès à aucune de ses zones mémoire, et être réactivée grâce au mode de communication HF fonctionnant encore.

Dans ce cas, le mode HF peut même être désactivé selon l'un de modes de réalisation particuliers présentés ci-dessus, à savoir en permettant la réactivation par une unique commande et grâce à l'identifiant de substitution accessible en mémoire.

Selon un aspect particulier de l'invention, ladite mémoire servant à stocker également des données utilisateur, susceptibles d'être transmises par l'étiquette à un dit équipement de commande, dans l'état désactivé, la transmission à un dit équipement de commande desdites données utilisateur est inhibée.

Ainsi, la désactivation de l'étiquette permet d'inhiber la transmission de donnée utilisateurs stockées dans la mémoire de l'étiquette, sécurisant ainsi ces données.

L'invention concerne également, selon un mode de réalisation particulier, une étiquette électronique, comprenant
- au moins un module de communication pour communiquer avec au moins un équipement de commande,
- une mémoire servant à stocker au moins un identifiant d'étiquette propre à ladite étiquette, susceptible d'être transmis par l'étiquette à un dit équipement de commande,
- un module de désactivation agencé pour, suite à la réception d'une commande de désactivation, faire passer l'étiquette dans un état désactivé en inhibant la transmission à un dit équipement de commande dudit au moins un identifiant d'étiquette, ladite commande de désactivation comprenant au moins un identifiant d'état, noté identifiant de substitution, transmis par l'étiquette en lieu et place dudit identifiant d'étiquette dans une réponse à une commande reçue dans l'état désactivé, ledit identifiant de substitution ne permettant pas d'identifier ladite étiquette; et
- un module de réactivation agencé pour, suite à la réception d'une commande de réactivation, faire passer l'étiquette dans un état activé en autorisant la transmission à un dit équipement de commande dudit au moins un identifiant d'étiquette.

Selon un aspect particulier de l'invention, l'étiquette, comprenant au moins un module de communication pour communiquer via un premier canal et via un deuxième canal, le module de désactivation étant agencé pour faire passer l'étiquette dans un état désactivé en inhibant la transmission via le premier canal dudit au moins un identifiant d'étiquette à un dit équipement de commande et en autorisant la transmission via le deuxième canal dudit identifiant d'étiquette à un dit équipement de commande , le module de réactivation est agencé pour, suite à la réception d'une commande de réactivation reçue via le deuxième canal, faire passer l'étiquette dans un état activé en autorisant la transmission via le premier canal dudit au moins un identifiant d'étiquette à un dit équipement de commande .

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1a et 1b illustrent les principales étapes du procédé de gestion du mode de fonctionnement d'une étiquette RFID selon un premier mode de réalisation particulier de l'invention ;
- les figures 2a et 2b présentent deux exemples d'étiquettes RFID, respectivement selon deux modes de réalisation particuliers de l'invention ;
- la figure 3 présente un exemple de mémoire d'une étiquette selon un second mode de réalisation particulier de l'invention ;
- la figure 4 illustre un exemple de fonctionnement d'une étiquette selon un second mode de réalisation particulier de l'invention.

### 5. Description d'un mode de réalisation de l'invention

### 5.1 Principe général

L'invention est décrite dans le cas de son application à une étiquette sans contact RFID, mais son principe de désactivation / réactivation s'applique également à des étiquettes électroniques utilisant d'autres modes de communication.

L'étiquette électronique présente une zone de mémoire pour le stockage d'un identifiant d'étiquette (UID), propre à ladite étiquette, susceptible d'être transmis par l'étiquette à un équipement de commande.

Cet identifiant est unique, en ce qu'aucune autre étiquette n'est identifiée par ce même identifiant lorsque l'on utilise un canal de communication donné (par exemple le canal UHF, ou le canal HF). Cependant lorsque l'étiquette est capable de communiquer via deux canaux de communication distincts (UHF et HF par exemple), deux identifiants d'étiquette distincts (par exemple, l'un de type ePC et l'autre de type UID / TID) sont stockés dans la mémoire de l'étiquette. Chacun de ces deux identifiants d'étiquette est transmissible à un équipement de commande, via l'un ou l'autre de ces deux canaux, par exemple en réponse à une commande de lecture de cet identifiant ou en réponse à une autre commande.

Le principe général de l'invention repose sur la désactivation réversible d'une étiquette de type RFID, permettant de la désactiver :
- en inhibant la transmission à un équipement de commande, via au moins un canal de communication, de tout ou partie des données stockées en mémoire de l'étiquette, notamment de données utilisateurs et des identifiants d'étiquette,
- en autorisant l'étiquette à répondre dans son état désactivé à au moins une commande spécifique de réactivation.

En effet, cette désactivation entraîne une modification de l'état de l'étiquette, la marquant comme désactivée, et permet une protection des données en mémoire, ainsi qu'un comportement en mode restreint de l'étiquette pour toute commande autre que la commande de réactivation spécifique.

### 5.2 Description d'un premier mode de réalisation

On présente maintenant, en relation avec la figure la, un premier mode de réalisation particulier de l'invention pour la désactivation d'une étiquette.

Une étape 10 de désactivation d'une étiquette est mise en oeuvre sur réception, lors d'une étape de réception 101, d'une commande D de désactivation, émise par un équipement de commande, par exemple un lecteur distant, apte à communiquer avec l'étiquette via au moins un canal de communication, par exemple en UHF et/ou en HF. Un tel équipement de commande peut lire ou écrire des données dans l'étiquette par envoi d'une commande appropriée : lorsque cette commande est traitée par l'étiquette, une opération de lecture ou écriture d'au moins une de ces données est déclenchée par l'étiquette, cette opération pouvant soit être demandée explicitement, soit être nécessaire implicitement pour traiter la commande reçue.

Cette commande *D* de désactivation comprend, selon ce mode de réalisation de l'invention, au moins un mot de passe de désactivation et un identifiant d'état, noté par la suite identifiant de substitution, distinct de l'identifiant unique (UID) déjà attribué à l'étiquette mais susceptible d'être transmis par l'étiquette en lieu et place de l'identifiant unique (UID) lorsque l'étiquette est dans l'état désactivé.

Contrairement à l'identifiant unique, l'identifiant de substitution n'est en général pas propre à une étiquette. Il peut être commun à plusieurs étiquettes désactivées. Il est représentatif de l'état de désactivation de l'étiquette.

Une sous-étape de comparaison 102 permet de valider cette commande de désactivation, en comparant le mot de passe de désactivation transmis avec la commande de désactivation avec un mot de passe de référence de désactivation, stocké par exemple dans une partie de la mémoire de l'étiquette.

Ainsi, la désactivation d'une étiquette n'est pas accessible à tout lecteur apte à communiquer avec cette étiquette, mais correspond à une fonction réservée, via la connaissance d'un mot de passe, à un lecteur, ou un nombre restreint de lecteurs, selon les besoins d'utilisation de l'étiquette.

Par exemple, si de telles étiquettes sont positionnées sur des produits lors de leur fabrication, ou en sortie de la chaîne de fabrication, dans une optique de traçabilité, il peut être nécessaire de désactiver ces étiquettes à certains moments du transit de ces produits, par exemple en sortie d'entrepôt pour éviter l'espionnage. Il est en revanche préférable que la désactivation des étiquettes puisse être contrôlée et donc validée via l'utilisation d'un mot de passe. L'obtention de ce mot de passe de désactivation par le lecteur est décrite ci-dessus, en relation avec l'étape de réactivation de l'étiquette.

Ainsi, si la comparaison entre les mots de passe de désactivation est négative, alors la désactivation de l'étiquette ne peut pas avoir lieu.

Sinon, la désactivation est mise en oeuvre, dans une sous-étape 103, comprenant notamment l'écriture, dans une partie spécifique de la mémoire comprenant un champ d'information représentatif de l'état désactivé ou non de l'étiquette, de l'identifiant de substitution transmis avec la commande de désactivation. Ce champ d'information est accessible par un équipement de commande en lecture au moins dans l'état désactivé afin que l'état désactivé de l'étiquette soit détectable par lecture de ce champ et que l'identifiant de substitution puisse être utilisé dans l'état désactivé, en lieu et place de l'identifiant unique.

Ainsi, dans l'état désactivé, ce champ d'information présente une information d'état spécifique, utilisable par exemple lors de la réactivation de l'étiquette (comme décrit ci-dessous) qui empêche la traçabilité de l'étiquette, du fait que cet identifiant contenu dans ce champ d'information n'est pas unique, remplissant ainsi un des critères de désactivation, à savoir rendre le traçage de l'étiquette impossible.

Cet identifiant de substitution peut correspondre à une valeur prédéterminée pour toutes les étiquettes désactivées, ou bien à une valeur prédéterminée parmi une pluralité de valeurs prédéterminées pour des étiquettes désactivées. Cet identifiant de substitution n'est cependant pas unique, de façon à ne pas permettre le traçage d'une étiquette désactivée.

Cette étape 103 permet également de mettre à jour les droits d'accès à certaines données stockées dans la mémoire de l'étiquette, en interdisant notamment l'accès, par un équipement de commande, en lecture et en écriture aux données utilisateurs, ainsi qu'à l'identifiant unique (UID) de l'étiquette, remplissant ainsi un autre critère de désactivation, à savoir la sécurisation des données stockées dans l'étiquette.

Comme décrit ci-dessous, la mémoire de l'étiquette peut être partitionnée en différentes zones, celles-ci pouvant être rendues indépendamment accessibles ou non dans l'état désactivé d'une étiquette, selon les besoins d'utilisation.

Enfin, cette étape 103 permet de définir les droits de réponse de l'étiquette aux commandes reçues par l'étiquette, de façon par exemple à restreindre les possibilités d'interrogation de l'étiquette et le fonctionnement de cette étiquette. Dans la suite de la description on parlera de mode restreint.

Deux variantes A1 et B1 sont possibles pour ce mode restreint:
- dans le mode restreint A1, l'étiquette ne répond à aucune commande, sauf à une commande de réactivation spécifique ;
- dans le mode restreint B1, l'étiquette répond à au moins une commande autre qu'une commande de réactivation, mais en renvoyant des données dégradées, des codes d'erreurs, des valeurs par défaut, des valeurs nulles au lieu de valeurs réelles, etc.

Là encore, les règles de réponse aux commandes peuvent être adaptées aux besoins d'utilisation, pour l'état désactivé de l'étiquette.

Ainsi, si l'on considère par exemple une étiquette RFID fonctionnant en mode HF, lorsque celle-ci est désactivée et qu'elle entre dans un champ HF, son état désactivé est détectable par lecture du champ d'information contenant l'identifiant de substitution, champ qui reste accessible en lecture par un équipement de commande. L'écriture du champ d'information est toujours possible par l'intermédiaire de la commande de réactivation.

Dans l'état désactivé, les données sensibles telles que identifiant unique UID ou les données utilisateurs sont inaccessibles en lecture et en écriture par un équipement de commande : c'est-à-dire que l'étiquette ne répond à aucune commande ayant pour but de modifier ou lire ces données ou de renvoyer une réponse contenant tout ou partie de ces données. Ainsi, la transmission de ces données, en réponse à une commande émise par un équipement de commande, est inhibée.

Par contre, les données de contrôle d'accès, incluant :
- les données définissant les droits d'accès aux données sensibles (l'identifiant unique UID et les données utilisateurs),
- les données définissant les droits de réponse aux commandes
sont accessibles en lecture et en écriture par un équipement de commande (par l'intermédiaire de la commande de réactivation) dans l'état désactivé tout comme dans l'état activé afin de pouvoir contrôler l'accès aux données dans ces deux états, sous réserve de disposer d'un éventuel mot de passe requis pour une telle commande et/ou pour l'opération de lecture ou écriture.

En outre, dans l'état désactivé, l'étiquette ne répond qu'à une commande de réactivation spécifique, les autres commandes étant ignorées ou traitées de manière dégradée.

Une telle étiquette désactivée, selon ce mode de réalisation particulier de l'invention, est donc non localisable de manière unique et non identifiable (car son identifiant unique n'est plus accessible, et l'identifiant de substitution n'est pas unique).

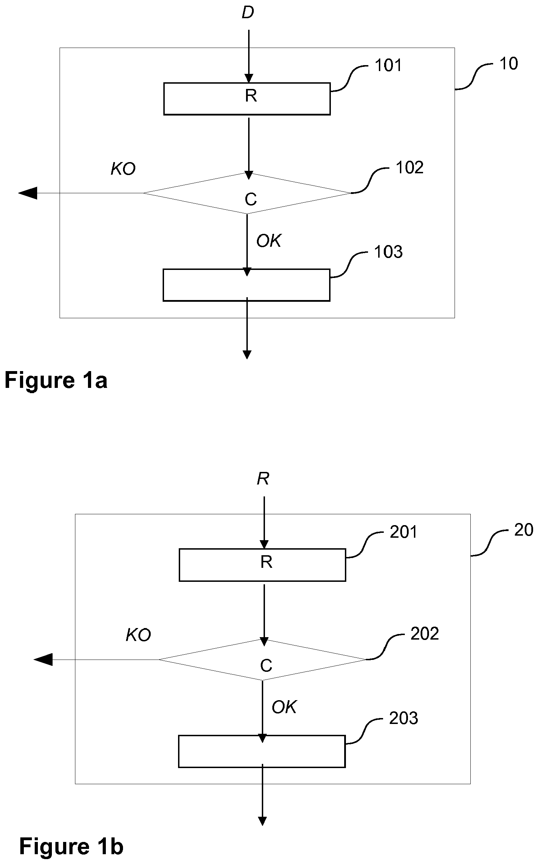

On présente maintenant, en relation avec la figure 1b, les principales étapes de la réactivation d'une étiquette désactivée, selon ce premier mode de réalisation particulier de l'invention.

Une étape 20 de réactivation d'une étiquette est mise en oeuvre sur réception, lors d'une étape de réception 201, d'une commande R de réactivation, émise par un équipement de commande, par exemple un lecteur distant, apte à communiquer avec l'étiquette via au moins un canal de communication.

Cette commande R de réactivation comprend, selon ce mode de réalisation de l'invention, au moins un mot de passe de réactivation.

Selon une première variante de réalisation de l'invention, ce mot de passe de réactivation est écrit préalablement à la désactivation dans la mémoire de l'étiquette, par exemple lors d'une phase de personnalisation, suite à la réception par l'étiquette d'une commande contenant ce mot de passe.

Selon une deuxième variante de réalisation, ce mot de passe de réactivation est généré (par exemple, aléatoirement) par l'étiquette, lors de son initialisation ou lors de la désactivation, avant d'être automatiquement écrit dans la mémoire de l'étiquette. Dans ce cas, l'étiquette transmet au lecteur le mot de passe de réactivation en réponse à une commande de désactivation. Cette variante permet de renforcer la sécurité de ces fonctions de désactivation/réactivation d'une étiquette, car la réponse à une commande provenant d'une étiquette est plus difficile à espionner qu'une commande transmise à l'étiquette.

Une table de correspondance entre mots de passe de réactivation et identifiants désactivés peut être maintenue par le lecteur.

Ainsi, sur le même principe, un mot de passe de désactivation, pour une désactivation future, peut être transmis au lecteur en réponse à une commande de réactivation. Dans ce cas, l'étiquette génère un mot de passe de désactivation, le stocke dans sa mémoire comme mot de passe de désactivation de référence, et le transmet au lecteur.

Une sous-étape de comparaison 202 permet de valider la commande de réactivation, en comparant le mot de passe de réactivation transmis avec la commande de réactivation avec un mot de passe de référence de réactivation, stocké par exemple dans une partie de la mémoire de l'étiquette.

Ainsi, comme pour la désactivation, la réactivation d'une étiquette n'est pas accessible à tout lecteur apte à communiquer avec cette étiquette, mais correspond à une fonction réservée, via la connaissance d'un mot de passe, à un lecteur, ou un nombre restreint de lecteurs, selon les besoins d'utilisation de l'étiquette.

Par exemple, si de telles étiquettes sont positionnées sur des produits lors de leur fabrication, ou en sortie de la chaîne de fabrication, dans une optique de traçabilité, il peut être cependant nécessaire de désactiver ces étiquettes au moment de la vente du produit, pour des raisons de protection de la vie privée. Il est en revanche très utile de pouvoir réactiver de telles étiquettes, par exemple lorsque le consommateur ramène le produit pour échange ou remboursement et que le produit se retrouve en « circulation ». Dans ce cas, il est préférable que cette réactivation puisse être contrôlée et donc validée par l'utilisation d'un mot de passe.

Ainsi, si la comparaison des mots de passe de réactivation est négative, alors la réactivation de l'étiquette ne peut pas avoir lieu.

Sinon, la réactivation est mise en oeuvre, dans une sous-étape 203, comprenant notamment l'écriture, dans un champ d'information spécifique de la mémoire dédiée à l'état de l'étiquette, d'une valeur prédéterminée (par exemple nulle) représentative du l'état activé de l'étiquette.

Ainsi, le champ d'information spécifique de l'étiquette présente une valeur représentative de l'état activé de l'étiquette, la différenciant d'une étiquette désactivée. Par exemple, cette valeur est une valeur nulle ou une valeur non nulle prédéterminée.

Cette étape 203 permet également de mettre à jour les droits d'accès aux données stockées dans la mémoire de l'étiquette, en autorisant par exemple à nouveau l'accès, pour un équipement de commande, en lecture et en écriture aux données utilisateurs, ainsi qu'en lecture à l'identifiant unique (UID) de l'étiquette.

Enfin, cette étape 203 permet de définir les droits de réponse aux commandes reçues par l'étiquette, de façon à autoriser l'étiquette à répondre à nouveau à toutes les commandes qu'elle reçoit.

Cette étape de réactivation 20 permet ainsi de remettre l'étiquette dans un état activé, comme avant une désactivation.

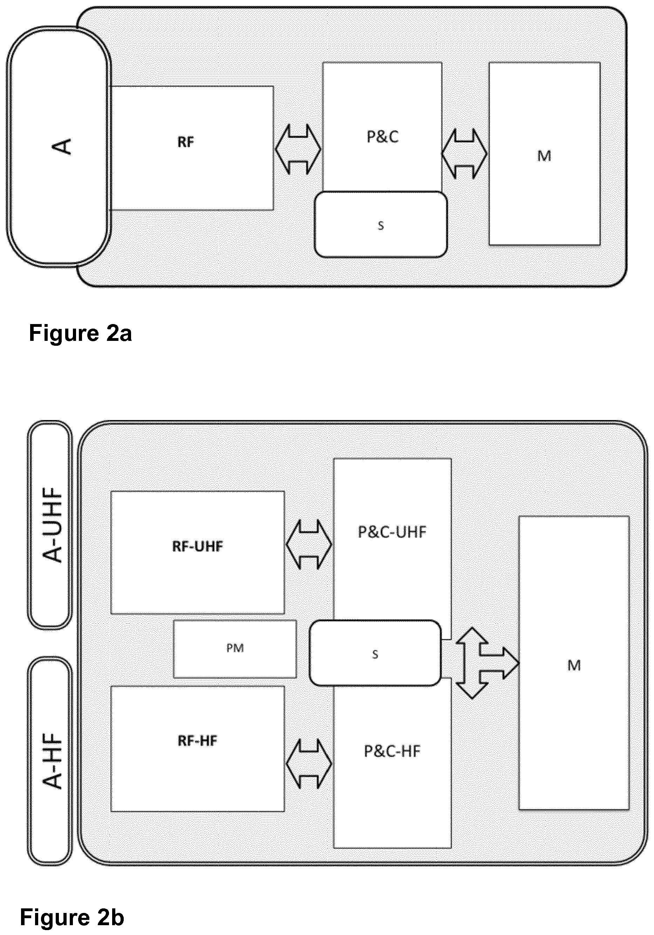

On présente maintenant, en relation avec la figure 2a, un exemple d'architecture d'une étiquette RFID selon ce premier mode de réalisation particulier de l'invention, comprenant une antenne A et un circuit intégré composé de trois parties principales :
- une interface radio fréquence RF (encore notée « *Frontend* » en anglais), reliée à l'antenne et permettant notamment de réaliser les fonctions de communication RF et de récupération d'énergie,
- un module P&C de contrôle numérique du protocole et des fonctionnalités permettant d'interpréter les commandes reçues par l'interface RF, et de les exécuter,
- un module supplémentaire S de sécurité, permettant notamment de mettre en oeuvre les fonctions de désactivation /réactivation de l'étiquette selon l'un quelconque des modes de réalisation particuliers de l'invention,
- une mémoire M non volatile permettant de stocker les données utilisateur ou système.

Une étiquette présentant une telle architecture est notamment apte à mettre en oeuvre les étapes du procédé selon l'un quelconque des modes de réalisation particuliers de l'invention décrits ci-dessus. Une telle étiquette communique en HF, ou en UHF, et implémente les protocoles de communication et les commandes relatifs aux normes respectives HF ou UHF. De même, la mémoire d'une telle étiquette est mise en oeuvre selon les normes respectives HF ou UHF (par exemple, le protocole HF ne définit pas de contraintes particulières pour la mémoire, contrairement au protocole UHF qui impose un certain partitionnement de la mémoire).

### 5.3 Description d'un deuxième mode de réalisation

Une autre architecture d'étiquette électronique est proposée ci-dessous, en relation avec la figure 2b.

Une telle étiquette électronique est une étiquette bi-fréquence qui communique, selon ce second mode de réalisation particulier de l'invention, selon deux canaux de communication distincts, c'est-à-dire en HF d'une part et en UHF d'autre part.

Pour ce faire, une telle étiquette présente des moyens de communications pour communiquer indépendamment via ces deux canaux de communication : deux antennes, A-HF et A-UHF, reliées au circuit intégré par deux modules d'interface RF-UHF et RF-HF. Le circuit intégré comprend en outre :
- deux modules P&C-UHF et P&C-HF de contrôle numérique du protocole et des fonctionnalités permettant d'interpréter les commandes reçues par les interfaces RF-UHF et RF-HF, et de les exécuter, respectivement pour le mode UHF et le mode HF. Dans un cas particulier de ce mode de réalisation, les deux modules P&C-UHF et P&C-HF sont regroupés dans un même module, le traitement des commandes reçues via l'un ou l'autre des modules d'interface RF-UHF et RF-HF se faisant dans ce module commun. Cela peut être le cas par exemple dans le standard ePC global gen2, décrivant une implémentation UHF et HF,
- un module S de sécurité, permettant notamment de mettre en oeuvre les fonctions de désactivation /réactivation de l'étiquette selon l'un quelconque des modes de réalisation particuliers de l'invention,
- une mémoire commune M non volatile permettant de stocker les données utilisateur ou système, pour les deux modes UHF et HF.

Une telle étiquette présente la particularité de disposer d'une seule mémoire, commune aux deux modes de communication HF et UHF, contrairement aux étiquettes « bi-fréquence » connues, lesquelles disposent de deux circuits intégrés distincts pour chacun des deux modes de communication, et donc de deux mémoires distinctes.

Une telle étiquette permet donc de faciliter les échanges entre les modules de contrôle numériques et l'unique mémoire M, ainsi que les échanges entre le module de sécurité S et la mémoire M.

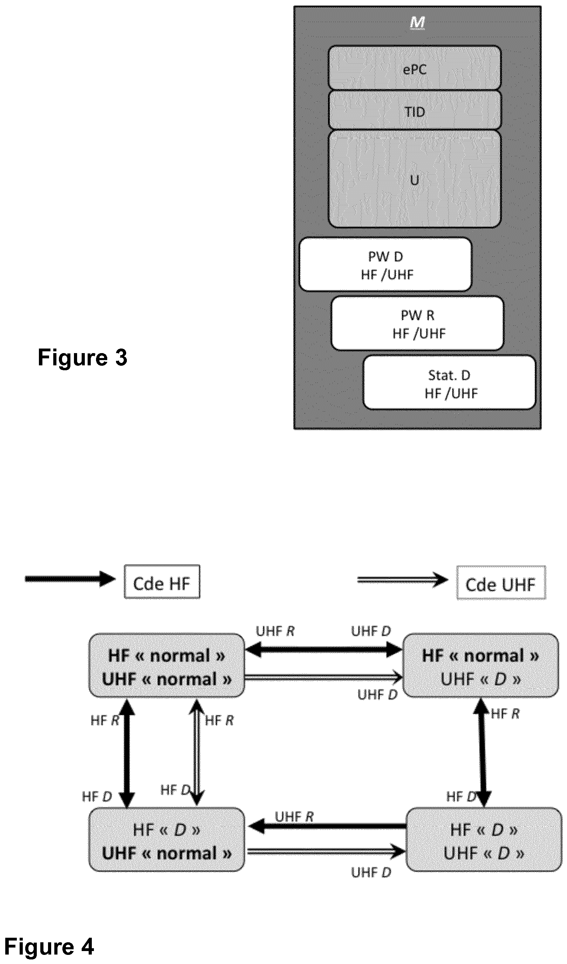

Par exemple, une telle mémoire unique M est illustrée en figure 3, selon ce second mode de réalisation particulier de l'invention.

De façon à être compatible avec les contraintes de partitionnement de mémoire requises par le protocole UHF, la mémoire M présente une pluralité de zones, chacune dédiée à un type de données.

Par exemple, une zone est dédiée au code unique ePC (pour « *Electronic Product Code* » en anglais), une autre zone à l'identifiant unique TID, une autre zone U pour les données utilisateurs.

Par ailleurs, selon ce second mode de réalisation particulier, trois zones supplémentaires sont nécessaires, afin de stocker les mots de passe de désactivation HF et UHF (PW D HF/UHF), les mots de passe de réactivation HF et UHF (PW R HF/UHF) et les états de désactivation HF et UHF (Stat. D HF/UHF).

Différentes méthodes de désactivation / réactivation de cette étiquette bi-fréquence vont être décrites. Dans cette description, on parlera indifféremment de la désactivation / réactivation d'une partie de l'étiquette (UHF, HF), d'un mode de communication (UHF, HF) ou d'un canal de communication (UHF, HF).

Les deux parties HF et UHF (et le mode de communication ou canal de communication associé) d'une étiquette bi-fréquence telle que présentée ci-dessus, en relation avec les figures 2b et 3, peuvent être chacune désactivées / réactivées indépendamment l'une de l'autre en utilisant les procédés du premier mode de réalisation décrits au regard de la figure la ou 1b.

Lorsqu'une partie / un mode de communication / un canal de communication est désactivé, une restriction fonctionnelle est imposée pour cette partie / ce mode de communication / ce canal de communication.

Trois modes de restriction fonctionnelle sont possibles pour un canal de communication dans le cas d'une étiquette avec deux canaux de communication :
- dans un mode restreint A2, l'étiquette ne répond à aucune commande reçue via ce canal de communication, sauf à une commande de réactivation spécifique : on dit que l'étiquette est partiellement muette pour ce canal / mode de communication,
- dans un mode restreint B2, l'étiquette répond à au moins une commande, reçue via ce canal de communication, autre qu'une commande de réactivation, mais en renvoyant des données dégradées (valeur nulle ou autre valeur par défaut, codes d'erreur, etc),
- dans un mode restreint C2, l'étiquette est totalement muette pour ce canal / mode de communication : elle ne répond à aucune commande reçue via ce canal de communication, pas même à une commande de réactivation.

En outre, les deux parties HF et UHF peuvent être désactivées, en désactivant une partie puis l'autre, avec l'une des restrictions fonctionnelles décrites ci-dessus.

Du fait de la présence de deux modes / canaux de communication, il est possible de rendre une partie d'étiquette complètement muette et d'utiliser l'autre partie d'étiquette pour la réactivation de la partie complètement muette. On ne peut toutefois rendre les deux parties d'étiquettes complètement muettes.

Les combinaisons suivantes sont donc possibles :
- la première partie désactivée passe en mode restreint C2, c'est-à-dire complètement muette sur le canal de communication associé à cette première partie, puis la deuxième partie désactivée passe en mode restreint A2 ou B2, la réactivation de l'une ou l'autre partie ne pouvant se faire que via un canal de communication associé à une partie qui n'est pas complètement muette au moment de cette réactivation ;
- la première partie désactivée passe en mode restreint A2 ou B2, puis la deuxième partie désactivée passe en mode restreint A2 ou B2, la réactivation de l'une ou l'autre partie pouvant se faire via le canal de communication de l'une ou de l'autre partie puisqu'aucune n'est complètement muette au moment de cette réactivation ;
- la première partie désactivée passe en mode restreint A2 ou B2, puis la deuxième partie désactivée passe en mode restreint C2, c'est-à-dire complètement muette sur le canal de communication associé à cette deuxième partie ; la réactivation de l'une ou l'autre partie ne pouvant se faire que via un canal de communication associé à une partie qui n'est pas complètement muette au moment de cette réactivation.

Lorsqu'une partie d'étiquette est totalement muette (mode restreint C2) en étant désactivée pour un mode / canal de communication, la réactivation de cette partie est impossible via ce mode / canal de communication. Lorsqu'une partie d'étiquette a un mode de fonctionnement restreint A2 ou B2, la réactivation de cette partie est possible via ce mode de communication.

Dans ce second mode de réalisation particulier de l'invention, il est possible d'indiquer à l'étiquette lors de sa désactivation la restriction fonctionnelle A2, B2, ou C2 désirée. Ce sera l'étiquette totalement muette si la réactivation est impossible via ce mode de communication, ou ce sera un fonctionnement restreint si la réactivation est possible via ce mode de communication.

Un mode de réalisation plus spécifique consiste à imposer un type de restriction fonctionnelle différente pour chaque mode de communication.

Dans la description qui va suivre, il a été choisi pour le mode de communication UHF une désactivation rendant l'étiquette totalement muette (mode restreint C2) et pour le mode communication HF, une désactivation en mode de fonctionnement restreint A2 ou B2. Dans ce cas la réactivation n'est possible que par le canal de communication HF.

Les rôles des parties UHF et HF sont toutefois complètement interchangeables : désactivation en mode restreint C2 pour la partie HF et désactivation en mode restreint A2 ou B2 pour la partie UHF. L'ensemble de la description qui va suivre peut donc être transposée en inversant les rôles des parties UHF et HF.

La figure 4 illustre un exemple de réalisation du second mode de réalisation particulier de l'invention, dans lequel l'une quelconque des parties HF et UHF d'une étiquette bi-fréquence telle que présentée ci-dessus, en relation avec les figures 2b et 3, ou les deux parties de cette étiquette bi-fréquence, peuvent être désactivées/réactivées.

La désactivation de la première partie UHF s'effectue en utilisant l'un quelconque des deux canaux de communication, en revanche la réactivation de cette partie UHF ne peut s'effectuer qu'en utilisant le mode / canal de communication HF pour lequel l'étiquette n'est pas complètement muette.

La désactivation de la première partie (UHF) destinée à devenir complètement muette s'effectue au moyen d'une commande de désactivation envoyée sur l'un ou l'autre des canaux UHF ou HF. Puis une désactivation de la deuxième partie (dans l'exemple choisi, la partie HF) peut s'effectuer en complément : comme aucune commande ne peut être reçue et traitée si elle est transmise à la partie complètement muette, la commande de désactivation de la deuxième partie se fera nécessairement par envoi d'une commande de désactivation via le deuxième canal de communication et sera traitée par la deuxième partie. Pour cette deuxième partie, une restriction fonctionnelle sera mise en oeuvre sera le mode restreint A2 ou B2

En particulier, une étiquette RFID bi-fréquence UHF-HF selon ce second mode de réalisation particulier de l'invention peut être positionnée sur différents produits du commerce, ou objets de luxe et de marque, et peut même être mise en place dès le début de la chaîne d'approvisionnement (production, logistique, distribution, vente) et jusqu'au consommateur, donc au grand public.

Par exemple, un fabricant, ayant posé de telles étiquettes RFID sur ces produits pour faciliter sa gestion inventaire et la gestion des flux logistiques d'expédition, peut vouloir désactiver la partie UHF (lecture à longue distance) des étiquettes de chaque produit en sortie de ses entrepôts afin d'éviter d'être espionné sur sa production, tout en laissant activée la partie HF (lecture courte distance). En revanche, il pourra vouloir réactiver, le mode de communication UHF de ces étiquettes, au moment de la distribution des produits.

Par ailleurs, aujourd'hui, dans le secteur de la distribution, il est recommandé qu'après achat, si le consommateur le désire, l'étiquette RFID sur le produit acheté puisse être désactivée, la partir HF comme la partie UHF. Hors, de nombreux produits pouvant être rapportés au point de vente par le consommateur pour échange ou remboursement, il est indispensable de rendre cette désactivation réversible, selon l'un quelconque des modes de réalisation particuliers de l'invention.

L'étiquette bi-fréquence comporte en mémoire un ensemble de données propres à la première partie / au premier mode de communication / au premier canal de communication (par exemple UHF), cet ensemble comprenant :
- un champ d'information CH1 comprenant une valeur V1 représentative de l'état désactivé ou non du premier mode de communication ;
- des données de contrôle d'accès comprenant :
   - un mot de passe de désactivation MDPD1 pour la désactivation du premier mode de communication,
   - un mot de passe de réactivation MDPR1 pour la réactivation du premier mode de communication.

De même, cette étiquette comporte en mémoire un ensemble de données propres à la deuxième partie / au deuxième mode de communication / au deuxième canal de communication (dans l'exemple choisi, HF), cet ensemble comprenant :
- un champ d'information comprenant une valeur V2 représentative de l'état désactivé ou non du deuxième mode de communication ;
- des données de contrôle d'accès comprenant :
   - un mot de passe de désactivation MDPD2 pour la désactivation du deuxième mode de communication,
   - un mot de passe de réactivation MDPR2 pour la réactivation du deuxième mode de communication.
L'étiquette bi-fréquence comporte en mémoire des données communes à la première et deuxième partie, accessibles à la fois via le premier et le deuxième canal, incluant :
- des données utilisateur,
- un identifiant unique ID1, propre à l'étiquette, susceptible d'être transmis via le premier ou le deuxième canal de communication à un équipement de commande,
- un identifiant unique ID2, propre à l'étiquette, susceptible d'être transmis via le premier ou le deuxième canal de communication à un équipement de commande;

Ainsi, dans le second mode de réalisation de l'invention, l'étiquette peut se trouver dans quatre états différents, représentés à la figure 4:
- un premier état, dit état activé, ou « normal » de l'étiquette, dans lequel les deux parties HF et UHF sont activées (HF « normal », UHF « normal ») avec:
   - réponse à toute commande, qu'elle soit reçue via le canal UHF ou HF ;
   - une valeur représentative de l'état activé est égale à 0, dans le champ d'information CH1 propre au premier mode de communication UHF,
   - une valeur représentative de l'état activé est égale à 0, dans le champ d'information CH2 propre au deuxième mode de communication HF,
   - les données communes (données utilisateur, identifiants d'étiquette) accessibles en lecture, pouvant être obtenues par un équipement de commande envoyant une commande via le canal UHF ou HF ;
- un deuxième état, dit premier état désactivé dans lequel la partie UHF uniquement est désactivée, totalement muette et la partie HF est activée (HF « normal », UHF « D ») avec:
   - aucune réponse sur le canal UHF, quelle que soit la commande reçue via le canal UHF;
   - réponse à toute commande reçue via le canal HF, y compris une commande de réactivation du canal UHF, sous réserve toutefois que le mot de passe fourni soit correct ;
   - la valeur du champ d'information CH1 égale à un identifiant de substitution fourni avec la commande de désactivation de la partie UHF,
   - une valeur représentative de l'état activé de la partie HF dans le champ d'information CH2,
   - les données communes (données utilisateur, identifiants d'étiquette) accessibles en lecture, pouvant être obtenues par un équipement de commande envoyant une commande via le canal HF, mais dont la transmission est inhibée via le canal UHF ;
- un troisième état, dit deuxième état désactivé dans lequel la partie HF uniquement est désactivée et la partie UHF est activée (HF « D », UHF « normal ») :
   - mode de fonctionnement restreint A2 ou B2 via le canal HF, la seule commande pouvant être interprétée par le canal HF est une commande de réactivation de la partie HF;
   - réponse à toute commande via le canal UHF, y compris une commande de réactivation du canal HF, sous réserve toutefois que le mot de passe fourni soit correct ;
   - la valeur du champ d'information CH2 égale à un identifiant de substitution fourni avec la commande de désactivation de la partie HF,
   - une valeur représentative de l'état activé de la partie UHF égale à 0 dans le champ d'information CH1,
   - les données communes (données utilisateur, identifiants d'étiquette) accessibles en lecture, pouvant être obtenues par un équipement de commande envoyant une commande via le canal UHF, mais dont la transmission est inhibée via le canal HF ;
- un quatrième état, dit état désactivé complet, dans lequel les deux parties HF et UHF sont désactivées (HF « D », UHF « D »), avec :
   - aucune réponse sur le canal UHF, quelle que soit la commande reçue via le canal UHF (mode restreint C2) ;
   - mode de fonctionnement restreint A2 ou B2 via le canal HF, la seule commande pouvant être interprétée par le canal HF est une commande de réactivation de la partie UHF et HF;
   - la valeur du champ d'information CH1 égale à un identifiant de substitution fourni avec la commande de désactivation de la partie UHF,
   - la valeur du champ d'information CH2 égale à un identifiant de substitution fourni avec la commande de désactivation de la partie HF,
   - les données communes (données utilisateur, identifiants d'étiquette) complètement inaccessibles en lecture, dont la transmission est inhibée via le canal UHF et via le canal HF ;

Les transitions possibles entre ces 4 états sont les suivantes.

Lorsque l'étiquette est dans le premier état, elle peut :
- soit passer dans le deuxième état, suite à la réception d'une commande de désactivation de la partie UHF, la commande de désactivation pouvant être émise via le canal UHF ou via le canal HF,
- soit passer dans le troisième état suite à la réception d'une commande de désactivation de la partie HF, la commande de désactivation pouvant être émise via le canal UHF ou via le canal HF.

Lorsque l'étiquette est dans le deuxième état (partie UHF désactivée et complètement muette), elle peut :
- soit passer dans le premier état, suite à la réception d'une commande de réactivation de la partie UHF, émise via le canal HF,
- soit passer dans le quatrième état, suite à la réception d'une commande de désactivation de la partie HF, émise via le canal HF.

Lorsque l'étiquette est dans le troisième état (partie HF désactivée et en mode de fonctionnement restreint A2 ou B2), elle peut
- soit passer dans le premier état, suite à la réception d'une commande de réactivation de la partie HF, émise via le canal HF ; optionnellement, la commande de réactivation peut aussi être émise via le canal UHF,
- soit passer dans le quatrième état, suite à la réception d'une commande de désactivation de la partie UHF, émise via le canal UHF, la partie HF ne traitant que des commandes de réactivation dans le mode restreint A2 ou B2.

Lorsque l'étiquette est dans le quatrième état (partie UHF désactivée et complètement muette, partie HF désactivée et en mode de fonctionnement restreint A2 ou B2), elle peut :
- soit passer dans le deuxième état, suite à la réception d'une commande de réactivation de la partie HF, cette commande étant émise via le canal HF.
- soit passer dans le troisième état, suite à la réception d'une commande de réactivation de la partie UHF, cette commande étant émise via le canal HF.

Dans une variante de ce deuxième mode de réalisation, il peut être envisagé une définition différente des modes de fonctionnement restreints A2, B2 quant aux commandes effectivement traitées dans ce mode et à la manière dont elles sont traitées. Il peut par exemple être envisagé de répondre dans le mode restreint A2, B2 de la partie HF, non seulement à une commande de réactivation de la partie HF mais aussi à une commande de désactivation UHF (cas du passage du troisième état au quatrième état). Cependant, plus élevé sera le nombre de commandes auxquelles la carte répondra et moins l'étiquette sera protégée contre les usages frauduleux.

Dans une autre variante de ce deuxième mode de réalisation, il peut être envisagé d'interdire l'utilisation du canal UHF pour la désactivation et la réactivation de la partie HF et de n'autoriser pour la désactivation / réactivation de la partie HF que les commandes qui sont émises via le canal HF (cas où le passage du premier état au troisième état ou vice-versa de la figure 4 n'est pas possible par commande UHF). Le canal HF devient alors un canal auxiliaire du canal UHF, permettant de réactiver la partie UHF lorsqu'elle est complètement muette et pouvant elle-même avoir un mode de fonctionnement restreint.

Comme déjà décrit pour le premier mode de réalisation particulier de l'invention, les commandes de désactivation et de réactivation comprennent des mots de passe respectivement de désactivation/réactivation propre à la partie à désactiver / réactiver, permettant de valider les passages d'un état activé à un état désactivé, et vice versa, d'une étiquette. Un mot de passe de désactivation / réactivation fourni par la désactivation / réactivation propre à une partie est dans ce but comparé avec un mot de passe de désactivation / réactivation de référence propre à cette partie.

Par ailleurs, suite à la réception d'une commande de désactivation / réactivation d'une partie, les valeurs du champ CH1 ou CH2 propre à la partie à désactiver / réactiver sont mis à jour, respectivement avec un identifiant de substitution propre à cette partie pour l'état désactivé et avec une valeur nulle par exemple pour l'état activé.

En outre, suite à la réception d'une commande de désactivation / réactivation d'une partie,
- les droits d'accès aux données utilisateurs propres à cette partie et à l'identifiant d'étiquette propre à cette partie sont mis à jour afin d'interdire / d'autoriser l'accès à ces données en lecture par un équipement de commande et
- les droits de réponse de l'étiquette aux commandes reçues via le canal associée à la partie à désactiver / réactiver sont mis à jour afin d'interdire / d'autoriser l'étiquette de répondre à des commandes ultérieures.

## Revendications

1. Procédé de gestion du mode de fonctionnement d'une étiquette électronique, comprenant au moins un module de communication pour communiquer avec au moins un équipement de commande et une mémoire servant à stocker au moins un identifiant d'étiquette, propre à ladite étiquette, susceptible d'être transmis par l'étiquette audit équipement de commande,
**caractérisé en ce qu'**il comprend une étape de désactivation (10) suite à la réception d'une commande de désactivation, lors de laquelle ladite étiquette passe d'un état activé à un état désactivé, dans lequel la transmission audit équipement de commande dudit identifiant d'étiquette est inhibée et dans lequel ladite étiquette répond à une commande de réactivation en autorisant à nouveau la transmission de cet identifiant d'étiquette audit équipement de commande ;
et **en ce que** ladite commande de désactivation comprend au moins un identifiant d'état, noté identifiant de substitution, transmis par l'étiquette en lieu et place dudit identifiant d'étiquette dans une réponse à une commande reçue dans l'état désactivé, ledit identifiant de substitution ne permettant pas d'identifier ladite étiquette.

2. Procédé selon la revendication 1, **caractérisé en ce que** ladite étape de désactivation comprend les sous-étapes suivantes :
- réception (101) de ladite commande de désactivation comprenant au moins ledit identifiant de substitution, et un mot de passe de désactivation ;
- comparaison (102) dudit mot de passe de désactivation avec un mot de passe de désactivation de référence ;
- si ladite sous-étape de comparaison est positive (103) :
∘ écriture dudit identifiant de substitution dans un champ de données représentatif de l'état désactivé ou non de l'étiquette;
∘ mise à jour de droits d'accessibilité en lecture et en écriture d'au moins une partie de ladite mémoire de ladite étiquette contenant l'identifiant d'étiquette et de droits de réponse de l'étiquette aux commandes reçues, applicables dans l'état désactivé de ladite étiquette.

3. Procédé selon la revendication 1, **caractérisé en ce que** ladite étape de désactivation (10) comprend une sous-étape de transmission, par ladite étiquette à un équipement émetteur de ladite commande de désactivation, d'un mot de passe de réactivation.

4. Procédé selon la revendication 1, **caractérisé en ce qu'**il comprend une étape de réactivation (20) lors de laquelle ladite étiquette passe de l'état désactivé à l'état activé, ladite étape de réactivation (20) comprenant les sous-étapes suivantes :
- réception (201) d'une commande de réactivation comprenant au moins un mot de passe de réactivation ;
- comparaison (202) dudit mot de passe de réactivation avec un mot de passe de réactivation de référence ;
- si ladite sous-étape de comparaison est positive (203):
∘ écriture, dans un champ de données représentatif de l'état désactivé ou non de l'étiquette, d'une valeur représentative de l'état activé de ladite étiquette ;
∘ mise à jour de droits d'accessibilité en lecture et en écriture d'au moins une partie de ladite mémoire contenant l'identifiant d'étiquette et de droits de réponse de l'étiquette aux commandes reçues, applicables dans l'état activé de ladite étiquette.

5. Procédé selon la revendication 4, **caractérisé en ce que** ladite étape de réactivation (20) comprend une sous-étape de transmission, par ladite étiquette à un équipement émetteur de ladite commande de réactivation, d'un mot de passe de désactivation.

6. Procédé selon la revendication 1, dans lequel ladite étiquette est configurée pour communiquer via un premier canal et via un deuxième canal, ladite désactivation étant une désactivation sélective d'un mode de communication utilisant le premier canal, et dans lequel, dans l'état désactivé :
la transmission dudit au moins un identifiant d'étiquette audit équipement de commande est inhibée via le premier canal et autorisée via le deuxième canal, et ladite étiquette répond à une commande de réactivation reçue via le deuxième canal en autorisant à nouveau la transmission dudit au moins un identifiant d'étiquette via le premier canal.

7. Procédé selon la revendication 6, **caractérisé en ce que** l'étape de désactivation est déclenchée suite à la réception d'une commande de désactivation reçue via le premier canal ou via le deuxième canal.

8. Procédé selon la revendication 6, **caractérisé en ce que**, dans l'état désactivé, ladite étiquette ne répond à aucune commande reçue via le premier canal.

9. Procédé selon la revendication 6, **caractérisé en ce que** ladite étape de désactivation comprend les sous-étapes suivantes :
- réception d'une commande de désactivation comprenant au moins un identifiant d'état propre au premier canal, noté premier identifiant de substitution et correspondant audit identifiant de substitution, et un mot de passe de désactivation propre au premier canal ;
- comparaison dudit mot de passe de désactivation propre au premier canal avec un mot de passe de désactivation de référence propre au premier canal ;
- si ladite sous-étape de comparaison est positive :
o écriture dudit premier identifiant de substitution dans un champ de données représentatif de l'état désactivé ou non du mode de communication utilisant le premier canal;
∘ mise à jour de droits d'accessibilité en lecture et en écriture d'au moins une partie de ladite mémoire de ladite étiquette contenant le premier identifiant d'étiquette et de droits de réponse de l'étiquette aux commandes reçues via le premier canal, applicables dans l'état désactivé.

10. Procédé selon la revendication 9, **caractérisé en ce qu'**il comprend une étape de réactivation lors de laquelle ladite étiquette passe de l'état désactivé à l'état activé, ladite étape de réactivation comprenant les sous-étapes suivantes :
- réception d'une commande de réactivation émise via le second canal par un équipement de commande, ladite commande de réactivation comprenant au moins un mot de passe de réactivation propre au premier canal;
- comparaison dudit mot de passe de réactivation propre au premier canal avec un mot de passe de réactivation de référence propre au premier canal;
- si ladite sous-étape de comparaison est positive :
∘ écriture, dans un champ de données représentatif de l'état désactivé ou non du mode de communication utilisant le premier canal, d'une valeur représentative de l'état activé de ladite étiquette ;
∘ mise à jour de droits d'accessibilité en lecture et en écriture d'au moins une partie de ladite mémoire de ladite étiquette contenant le premier identifiant d'étiquette, et de droits de réponse de l'étiquette aux commandes reçues via le premier canal, applicables dans l'état activé de ladite étiquette.

11. Procédé selon l'une quelconque des revendications 1 à 10, ladite mémoire servant à stocker également des données utilisateur, susceptibles d'être transmises par l'étiquette audit équipement de commande,
**caractérisé en ce que**, dans l'état désactivé, la transmission audit équipement de commande desdites données utilisateur est inhibée.

12. Etiquette électronique, comprenant
- au moins un module de communication pour communiquer avec au moins un équipement de commande ;
- une mémoire servant à stocker au moins un identifiant d'étiquette propre à ladite étiquette, susceptible d'être transmis par l'étiquette audit équipement de commande ;
- un module de désactivation agencé pour, suite à la réception d'une commande de désactivation, faire passer l'étiquette dans un état désactivé en inhibant la transmission audit équipement de commande dudit au moins un identifiant d'étiquette, ladite commande de désactivation comprenant au moins un identifiant d'état, noté identifiant de substitution, transmis par l'étiquette en lieu et place dudit identifiant d'étiquette dans une réponse à une commande reçue dans l'état désactivé, ledit identifiant de substitution ne permettant pas d'identifier ladite étiquette; et
- un module de réactivation agencé pour, suite à la réception d'une commande de réactivation, faire passer l'étiquette dans un état activé en autorisant la transmission audit équipement de commande dudit au moins un identifiant d'étiquette.

13. Etiquette selon la revendication 12, comprenant au moins un module de communication pour communiquer via un premier canal et via un deuxième canal,
le module de désactivation étant agencé pour faire passer l'étiquette dans un état désactivé en inhibant la transmission via le premier canal dudit au moins un identifiant d'étiquette audit équipement de commande et en autorisant la transmission via le deuxième canal dudit identifiant d'étiquette audit équipement de commande,
le module de réactivation étant agencé pour, suite à la réception d'une commande de réactivation reçue via le deuxième canal, faire passer l'étiquette dans un état activé en autorisant la transmission via le premier canal dudit au moins un identifiant d'étiquette audit équipement de commande.

## Patentansprüche

1. Verfahren zur Verwaltung des Betriebsmodus eines elektronischen Etiketts, welches wenigstens ein Kommunikationsmodul zum Kommunizieren mit wenigstens einer Steuereinrichtung und einen Speicher, der dazu dient, wenigstens eine zu dem Etikett gehörige Etikettenkennung zu speichern, die geeignet ist, von dem Etikett an die besagte Steuereinrichtung übertragen zu werden, umfasst,
**dadurch gekennzeichnet, dass** es einen Deaktivierungsschritt (10) im Anschluss an den Empfang eines Deaktivierungsbefehls umfasst, in welchem das Etikett aus einem aktivierten Zustand in einen deaktivierten Zustand übergeht, in welchem die Übertragung der Etikettenkennung an die besagte Steuereinrichtung verhindert wird und in welchem das Etikett auf einen Reaktivierungsbefehl reagiert, indem es die Übertragung dieser Etikettenkennung an die besagte Steuereinrichtung erneut gestattet;
und dadurch, dass der Deaktivierungsbefehl wenigstens eine Zustandskennung umfasst, Substitutionskennung genannt, die von dem Etikett anstelle der Etikettenkennung in einer Antwort auf einen im deaktivierten Zustand empfangenen Befehl übertragen wird, wobei die Substitutionskennung nicht ermöglicht, das Etikett zu identifizieren.

2. Verfahren nach Anspruch 1, **dadurch gekennzeichnet, dass** der Deaktivierungsschritt die folgenden Teilschritte umfasst:
- Empfang (101) des Deaktivierungsbefehls, der wenigstens die Substitutionskennung und ein Deaktivierungspasswort umfasst;
- Vergleich (102) des Deaktivierungspassworts mit einem Referenz-Deaktivierungspasswort;
- falls der Teilschritt des Vergleichs positiv ausfällt (103):
∘ Schreiben der Substitutionskennung in ein Datenfeld, das für den deaktivierten oder nicht deaktivierten Zustand des Etiketts repräsentativ ist;
∘ Aktualisieren von Lese- und Schreibzugriffsrechten wenigstens eines Teils des Speichers des Etiketts, der die Etikettenkennung enthält, und von Reaktionsrechten des Etiketts auf die empfangenen Befehle, die im deaktivierten Zustand des Etiketts anwendbar sind.

3. Verfahren nach Anspruch 1, **dadurch gekennzeichnet, dass** der Deaktivierungsschritt (10) einen Teilschritt der Übertragung, durch das Etikett an eine den Deaktivierungsbefehl sendende Einrichtung, eines Reaktivierungspasswortes umfasst.

4. Verfahren nach Anspruch 1, **dadurch gekennzeichnet, dass** es einen Reaktivierungsschritt (20) umfasst, in welchem das Etikett vom deaktivierten Zustand zum aktivierten Zustand übergeht, wobei der Reaktivierungsschritt (20) die folgenden Teilschritte umfasst:
- Empfang (201) eines Reaktivierungsbefehls, der wenigstens ein Reaktivierungspasswort umfasst;
- Vergleich (202) des Reaktivierungspassworts mit einem Referenz-Reaktivierungspasswort;
- falls der Teilschritt des Vergleichs positiv ausfällt (203):
∘ Schreiben, in ein Datenfeld, das für den deaktivierten oder nicht deaktivierten Zustand des Etiketts repräsentativ ist, eines Wertes, der für den aktivierten Zustand des Etiketts repräsentativ ist;
∘ Aktualisieren von Lese- und Schreibzugriffsrechten wenigstens eines Teils des Speichers, der die Etikettenkennung enthält, und von Reaktionsrechten des Etiketts auf die empfangenen Befehle, die im aktivierten Zustand des Etiketts anwendbar sind.

5. Verfahren nach Anspruch 4, **dadurch gekennzeichnet, dass** der Reaktivierungsschritt (20) einen Teilschritt der Übertragung, durch das Etikett an eine den Reaktivierungsbefehl sendende Einrichtung, eines Deaktivierungspasswortes umfasst.

6. Verfahren nach Anspruch 1, wobei das Etikett dafür ausgelegt ist, über einen ersten Kanal und über einen zweiten Kanal zu kommunizieren, wobei die Deaktivierung eine selektive Deaktivierung eines Kommunikationsmodus ist, der den ersten Kanal verwendet, und wobei im deaktivierten Zustand:
die Übertragung der wenigstens einen Etikettenkennung an die besagte Steuereinrichtung über den ersten Kanal verhindert wird und über den zweiten Kanal gestattet wird, und das Etikett auf einen über den zweiten Kanal empfangenen Reaktivierungsbefehl reagiert, indem es die Übertragung der wenigstens einen Etikettenkennung über den ersten Kanal erneut gestattet.

7. Verfahren nach Anspruch 6, **dadurch gekennzeichnet, dass** der Deaktivierungsschritt im Anschluss an den Empfang eines Deaktivierungsbefehls ausgelöst wird, der über den ersten Kanal oder über den zweiten Kanal empfangen wird.

8. Verfahren nach Anspruch 6, **dadurch gekennzeichnet, dass** das Etikett im deaktivierten Zustand auf keinen Befehl reagiert, der über den ersten Kanal empfangen wird.

9. Verfahren nach Anspruch 6, **dadurch gekennzeichnet, dass** der Deaktivierungsschritt die folgenden Teilschritte umfasst:
- Empfang eines Deaktivierungsbefehls, der wenigstens eine zum ersten Kanal gehörige Zustandskennung, die erste Substitutionskennung genannt wird und der Substitutionskennung entspricht, und ein zum ersten Kanal gehöriges Deaktivierungspasswort umfasst;
- Vergleich des zum ersten Kanal gehörigen Deaktivierungspassworts mit einem zum ersten Kanal gehörigen Referenz-Deaktivierungspasswort;
- falls der Teilschritt des Vergleichs positiv ausfällt:
∘ Schreiben der ersten Substitutionskennung in ein Datenfeld, das für den deaktivierten oder nicht deaktivierten Zustand des Kommunikationsmodus repräsentativ ist, der den ersten Kanal verwendet;
∘ Aktualisieren von Lese- und Schreibzugriffsrechten wenigstens eines Teils des Speichers des Etiketts, der die erste Etikettenkennung enthält, und von Reaktionsrechten des Etiketts auf die über den ersten Kanal empfangenen Befehle, die im deaktivierten Zustand anwendbar sind.

10. Verfahren nach Anspruch 9, **dadurch gekennzeichnet, dass** es einen Reaktivierungsschritt umfasst, in welchem das Etikett vom deaktivierten Zustand zum aktivierten Zustand übergeht, wobei der Reaktivierungsschritt die folgenden Teilschritte umfasst:
- Empfang eines Reaktivierungsbefehls, der durch eine Steuereinrichtung über den zweiten Kanal gesendet wurde, wobei der Reaktivierungsbefehl wenigstens ein zum ersten Kanal gehöriges Reaktivierungspasswort umfasst;
- Vergleich des zum ersten Kanal gehörigen Reaktivierungspassworts mit einem zum ersten Kanal gehörigen Referenz-Reaktivierungspasswort;
- falls der Teilschritt des Vergleichs positiv ausfällt:
∘ Schreiben, in ein Datenfeld, das für den deaktivierten oder nicht deaktivierten Zustand des Kommunikationsmodus repräsentativ ist, der den ersten Kanal verwendet, eines Wertes, der für den aktivierten Zustand des Etiketts repräsentativ ist;
∘ Aktualisieren von Lese- und Schreibzugriffsrechten wenigstens eines Teils des Speichers des Etiketts, der die erste Etikettenkennung enthält, und von Reaktionsrechten des Etiketts auf die über den ersten Kanal empfangenen Befehle, die im aktivierten Zustand des Etiketts anwendbar sind.

11. Verfahren nach einem der Ansprüche 1 bis 10, wobei der Speicher dazu dient, auch Benutzerdaten zu speichern, die geeignet sind, von dem Etikett an die besagte Steuereinrichtung übertragen zu werden,
**dadurch gekennzeichnet, dass** im deaktivierten Zustand die Übertragung der Benutzerdaten an die besagte Steuereinrichtung verhindert wird.

12. Elektronisches Etikett, welches umfasst:
- wenigstens ein Kommunikationsmodul zum Kommunizieren mit wenigstens einer Steuereinrichtung;
- einen Speicher, der dazu dient, wenigstens eine zu dem Etikett gehörige Etikettenkennung zu speichern, die geeignet ist, von dem Etikett an die besagte Steuereinrichtung übertragen zu werden;
- ein Deaktivierungsmodul, das dafür eingerichtet ist, im Anschluss an den Empfang eines Deaktivierungsbefehls zu bewirken, dass das Etikett in einen deaktivierten Zustand übergeht, indem es die Übertragung der wenigstens einen Etikettenkennung an die besagte Steuereinrichtung verhindert, wobei der Deaktivierungsbefehl wenigstens eine Zustandskennung umfasst, Substitutionskennung genannt, die von dem Etikett anstelle der Etikettenkennung in einer Antwort auf einen im deaktivierten Zustand empfangenen Befehl übertragen wird, wobei die Substitutionskennung nicht ermöglicht, das Etikett zu identifizieren; und
- ein Reaktivierungsmodul, das dafür eingerichtet ist, im Anschluss an den Empfang eines Reaktivierungsbefehls zu bewirken, dass das Etikett in einen aktivierten Zustand übergeht, indem es die Übertragung der wenigstens einen Etikettenkennung an die besagte Steuereinrichtung gestattet.

13. Etikett nach Anspruch 12, welches wenigstens ein Kommunikationsmodul zum Kommunizieren über einen ersten Kanal und über einen zweiten Kanal umfasst, wobei das Deaktivierungsmodul dafür eingerichtet ist zu bewirken, dass das Etikett in einen deaktivierten Zustand übergeht, indem es die Übertragung der wenigstens einen Etikettenkennung über den ersten Kanal an die besagte Steuereinrichtung verhindert und indem es die Übertragung der Etikettenkennung über den zweiten Kanal an die besagte Steuereinrichtung gestattet, wobei das Reaktivierungsmodul dafür eingerichtet ist, im Anschluss an den Empfang eines über den zweiten Kanal empfangenen Reaktivierungsbefehls zu bewirken, dass das Etikett in einen aktivierten Zustand übergeht, indem es die Übertragung der wenigstens einen Etikettenkennung über den ersten Kanal an die besagte Steuereinrichtung gestattet.

## Claims

1. Method for managing the operating mode of an electronic tag, comprising at least a communication module for communicating with at least one control device and a memory serving to store at least one tag identifier specific to said tag, the identifier being transmissible by the tag to said control device, **characterized in that** it comprises a deactivation step (10) following the reception of a deactivation command, in which said tag changes from an activated state to a deactivated state, in which the transmission of said tag identifier to said control device is disabled, and in which said tag responds to a reactivation command by re-enabling the transmission of this tag identifier to said control device;
and **in that** said deactivation command comprises at least one state identifier, called the substitute identifier, transmitted by the tag in place of said tag identifier in a response to a command received in the deactivated state, said substitute identifier not allowing the identification of said tag.

2. Method according to Claim 1, **characterized in that** said deactivation step comprises the following sub-steps:
- receiving (101) said deactivation command comprising at least said substitute identifier, and a deactivation password;
- comparing (102) said deactivation password with a reference deactivation password;
- if said comparison sub-step is positive (103):
∘ writing said substitute identifier to a data field representative of the deactivated or non-deactivated state of the tag;
∘ updating read and write accessibility rights of at least a part of said memory of said tag containing the tag identifier, and rights of response of the tag to the commands received, applicable in the deactivated state of said tag.

3. Method according to Claim 1, **characterized in that** said deactivation step (10) comprises a sub-step of transmission of a reactivation password by said tag to a device transmitting said deactivation command.

4. Method according to Claim 1, **characterized in that** it comprises a reactivation step (20) in which said tag changes from the deactivated state to the activated state, said reactivation step (20) comprising the following sub-steps:
- receiving (201) a reactivation command comprising at least one reactivation password;
- comparing (202) said reactivation password with a reference reactivation password;
- if said comparison sub-step is positive (203):
∘ writing a value representative of the activated state of said tag to a data field representative of the deactivated or non-deactivated state of said tag;
∘ updating read and write accessibility rights of at least a part of said memory of said tag containing the tag identifier, and rights of response of the tag to the commands received, applicable in the activated state of said tag.

5. Method according to Claim 4, **characterized in that** said reactivation step (20) comprises a sub-step of transmission of a deactivation password by said tag to a device transmitting said reactivation command.

6. Method according to Claim 1, wherein said tag is configured to communicate via a first channel and via a second channel, said deactivation being a selective deactivation of a communication mode using the first channel, and wherein, in the deactivated state:
the transmission of said at least one tag identifier to said control device is disabled via the first channel and enabled via the second channel, and said tag responds to a reactivation command received via the second channel by re-enabling the transmission of said at least one tag identifier via the first channel.

7. Method according to Claim 6, **characterized in that** the deactivation step is launched following the reception of a deactivation command received via the first channel or via the second channel.

8. The method according to Claim 6, **characterized in that**, in the deactivated state, said tag does not respond to any command received via the first channel.

9. Method according to Claim 6, **characterized in that** said deactivation step comprises the following sub-steps:
- receiving a deactivation command comprising at least one state identifier specific to the first channel, called the first substitute identifier and corresponding to said substitute identifier, and a deactivation password specific to the first channel;
- comparing said deactivation password specific to the first channel with a reference deactivation password specific to the first channel;
- if said comparison sub-step is positive:
∘ writing said first substitute identifier to a data field representative of the deactivated or non-deactivated state of the communication mode using the first channel;
∘ updating read and write accessibility rights of at least a part of said memory of said tag containing the first tag identifier, and rights of response of the tag to the commands received via the first channel, applicable in the deactivated state.

10. Method according to Claim 9, **characterized in that** it comprises a reactivation step in which said tag changes from the deactivated state to the activated state, said reactivation step comprising the following sub-steps:
- receiving a reactivation command transmitted via the second channel by a control device, said reactivation command comprising at least one reactivation password specific to the first channel;
- comparing said reactivation password specific to the first channel with a reference reactivation password specific to the first channel;
- if said comparison sub-step is positive:
∘ writing a value representative of the activated state of said tag to a data field representative of the deactivated or non-deactivated state of the communication mode using the first channel;
∘ updating read and write accessibility rights of at least a part of said memory of said tag containing the first tag identifier, and rights of response of the tag to the commands received via the first channel, applicable in the activated state of said tag.

11. Method as claimed in any of Claims 1 to 10, said memory also serving to store user data transmissible by the tag to said control device,
**characterized in that**, in the deactivated state, the transmission of said user data to said control device is disabled.

12. Electronic tag, comprising
- at least one communication module for communicating with at least one control device;
- a memory serving to store at least one tag identifier specific to said tag, the identifier being transmissible by the tag to said control device,
- a deactivation module arranged for causing the tag to change to a deactivated state following the reception of a deactivation command, disabling the transmission of said at least one tag identifier to said control device, said deactivation command comprising at least one state identifier, called the substitute identifier, transmitted by the tag in place of said tag identifier in a response to a command received in the deactivated state, said substitute identifier not allowing the identification of said tag; and
- a reactivation module arranged for causing the tag to change to an activated state following the reception of a reactivation command, enabling the transmission of said at least one tag identifier to said control device.

13. Tag according to Claim 12, comprising at least one communication module for communicating via a first channel and via a second channel,
the deactivation module being arranged for causing the tag to change to a deactivated state, disabling the transmission via the first channel of said at least one tag identifier to said control device, and enabling the transmission via the second channel of said tag identifier to said control device,
the reactivation module being arranged for causing the tag to change to an activated state following the reception of a reactivation command via the second channel, enabling the transmission via the first channel of said at least one tag identifier to said control device.
